(19) Europäisches Patentamt / European Patent Office / Office européen des brevets

(11) **EP 2 876 766 A1**

(12) **EUROPEAN PATENT APPLICATION**
published in accordance with Art. 153(4) EPC

(43) Date of publication:
**27.05.2015 Bulletin 2015/22**

(51) Int Cl.:
*H02J 3/00* (2006.01)   *G06Q 50/06* (2012.01)
*H02J 13/00* (2006.01)

(21) Application number: **13820449.0**

(22) Date of filing: **16.07.2013**

(86) International application number:
**PCT/JP2013/004327**

(87) International publication number:
**WO 2014/013714 (23.01.2014 Gazette 2014/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.07.2012 JP 2012158363**

(71) Applicant: **Kabushiki Kaisha Toshiba**
**Minato-ku**
**Tokyo 105-8001 (JP)**

(72) Inventors:
• **KUMAZAWA, Toshimitsu**
  **Tokyo 105-8001 (JP)**
• **TOBA, Koji**
  **Tokyo 105-8001 (JP)**
• **KIYA, Genki**
  **Tokyo 105-8001 (JP)**
• **MIYAZAKI, Yasuyuki**
  **Tokyo 105-8001 (JP)**
• **KIMURA, Misao**
  **Tokyo 105-8001 (JP)**
• **KOSAKA, Yoko**
  **Tokyo 105-8001 (JP)**
• **KINOSHITA, Yoshihito**
  **Tokyo 105-8001 (JP)**
• **TAGUCHI, Yasuhiro**
  **Tokyo 105-8001 (JP)**

(74) Representative: **Lind, Urban Arvid Oskar**
**Awapatent AB**
**P.O. Box 11394**
**404 28 Göteborg (SE)**

(54) **ENERGY MANAGEMENT DEVICE, ENERGY MANAGEMENT METHOD, AND ENERGY MANAGEMENT PROGRAM**

(57)   An energy management system of an embodiment includes first and second registration units, first and second reception units, an aggregation unit, first and second transmission units, and a proration unit. The first registration unit registers a first energy management system as a host system configured to manage the energy management system upon a receipt of information representing permission of registration in reply to a registration request requested to the first energy management system. The second registration unit registers a second energy management system as a slave system to be managed by the energy management system upon a receipt of a registration request from the second energy management system. The first reception unit receives an amount of an energy supply and demand and an adjustable amount of an energy supply and demand, the amount of an energy supply and demand representing current power supply and demand amounts, the adjustable amount of an energy supply and demand representing an amount adjustable with respect to the current power supply and demand amounts, from each of a plurality of registered slave energy management systems. The aggregation unit aggregates the received amount of an energy supply and demand and the received adjustable amount of an energy supply and demand for each of the slave systems. The first transmission unit transmits aggregated results obtained by the aggregation unit to the registered host system. The second reception unit receives an adjustment amount of an energy supply and demand representing an adjustment amount to adjust power supply and demand calculated based on the aggregated results, from the host system. The proration unit prorates the received adjustment amount of an energy supply and demand among the plurality of slave systems. The second transmission unit transmits individual adjustment amounts of a power supply and demand prorated from the adjustment amount of an energy supply and demand, to the plurality of slave systems respectively.

# FIG. 2

20
ENERGY MANAGEMENT SYSTEM

21
HOST SYSTEM

28
HOST SYSTEM DATA RECEPTION UNIT

31
HOST SYSTEM REGISTRATION UNIT

27
HOST SYSTEM DATA TRANSMISSION UNIT

29
ENERGY SUPPLY AND DEMAND ADJUSTMENT PRORATION UNIT

26
ENERGY SUPPLY AND DEMAND ADJUSTABLE AMOUNT AGGREGATION UNIT

25
ENERGY SUPPLY AND DEMAND AMOUNT AGGREGATION UNIT

30
SLAVE SYSTEM DATA TRANSMISSION UNIT

32
SLAVE SYSTEM MANAGEMENT UNIT

24
SLAVE SYSTEM DATA RECEPTION UNIT

23
SLAVE SYSTEM

SLAVE SYSTEM

SLAVE SYSTEM

**Description**

FIELD

Embodiments described herein relate generally to an energy management system, an energy management method, and an energy management program.

BACKGROUND

A smart grid attracts attention which is aimed to realize a high-efficient, high-quality and highly reliable energy supply and demand management system. The smart grid utilizes a recent information communication technology (ICT) as well as an integral operation of the conventional concentrated power supply and power transmission system, thereby enabling management of integrating information on dispersed power supplies such as photovoltaic power generation, wind power generation and so on and information on the customer side using power.

However, when the above-described information communication technology is applied to various devices, it becomes possible to more precisely acquire and control information regarding the power supply and demand. Along with this, an energy management system for managing the power supply and demand is needed for a plurality of various devices.

As a method of controlling and managing power to the plurality of devices, there are proposed a method of performing control on the basis of more abstract power supply and demand data by a device on a host side in a system configured in a hierarchical fashion, a method of controlling the power supply and demand by dispersedly arranging single function modules, and so on. Further, as a method of controlling and managing the power supply and demand by devices automatically cooperating with one another, there is a known method of performing control by a specific device existing on a communication network automatically becoming a master of management to make the total sum of power under management to a predetermined value or less.

RELEVANT REFERENCES

Patent Reference

Reference 1: JP-A 2000-112515 (KOKAI)
Reference 2: JP-A 2000-116000 (KOKAI)
Reference 3: JP-A 2010-166690 (KOKAI)

SUMMARY

It is predicted that application of the information communication technology to various devices as described above leads to making more devices capable of acquiring and controlling the information regarding the power supply and demand. Along with this, an occasion to change the energy supply and demand management system performing management in a hierarchical fashion via a plurality of energy management systems.

However, particularly, a large-scale energy supply and demand management system having a hierarchical configuration so far needs to perform adjustment among energy management systems when adding, deleting changing the energy management systems, and is difficult to cope with the above case.

Hence, the problem to be solved by the present invention is to provide an energy management system, an energy management method, and an energy management program, each capable of easily coping with change in a system managing power supply and demand.

MEANS FOR SOLVING THE PROBLEMS

An energy management system of an embodiment includes first and second registration units, first and second reception units, an aggregation unit, first and second transmission units, and a proration unit. The first registration unit registers a first energy management system as a host system configured to manage the energy management system upon a receipt of information representing permission of registration in reply to a registration request requested to the first energy management system. The second registration unit registers a second energy management system as a slave system to be managed by the energy management system upon a receipt of a registration request from the second energy management system. The first reception unit receives an amount of an energy supply and demand and an adjustable amount of an energy supply and demand, the amount of an energy supply and demand representing current power supply and demand amounts, the adjustable amount of an energy supply and demand representing an amount adjustable with respect to the current power supply and demand amounts, from each of a plurality of registered slave energy management systems. The aggregation unit aggregates the received amount of an energy supply and demand and the received adjustable amount of an energy supply and demand for each of the slave systems. The first transmission unit transmits aggregated results obtained by the aggregation unit to the registered host system. The second reception unit receives an adjustment amount of an energy supply and demand representing an adjustment amount to adjust power supply and demand calculated based on the aggregated results, from the host system. The proration unit prorates the received adjustment amount of an energy supply and demand among the plurality of slave systems. The second transmission unit transmits individual adjustment amounts of a power supply and demand prorated from the adjustment amount of an energy supply and demand, to the plurality of slave systems respectively.

BRIEF DESCRIPTION OF THE DRAWINGS

Fig. 1 is a diagram illustrating a configuration of an energy supply and demand management system including energy management systems according to first to fifth embodiments.
Fig. 2 is a diagram illustrating a configuration of the energy management system according to the first embodiment.
Fig. 3 is a chart exemplifying an energy supply and demand amount and an energy supply and demand adjustable amount which are received from a slave system by a slave system data reception unit included in the energy management system in Fig. 2.
Fig. 4 is a chart exemplifying aggregated results of the energy supply and demand amount and the energy supply and demand adjustable amount which are transmitted to a host system by a host system data transmission unit included in the energy management system in Fig. 2.
Fig. 5 is a flowchart illustrating the operation of the energy management system in Fig. 2.
Fig. 6 is a diagram illustrating a configuration of the energy management system according to the second embodiment.
Fig. 7 is a diagram illustrating a configuration of the energy management system according to the third embodiment.
Fig. 8 is a diagram illustrating a configuration of the energy management system according to the fourth embodiment.
Fig. 9 is a diagram illustrating a configuration of the energy management system according to the fifth embodiment.

DETAILED DESCRIPTION

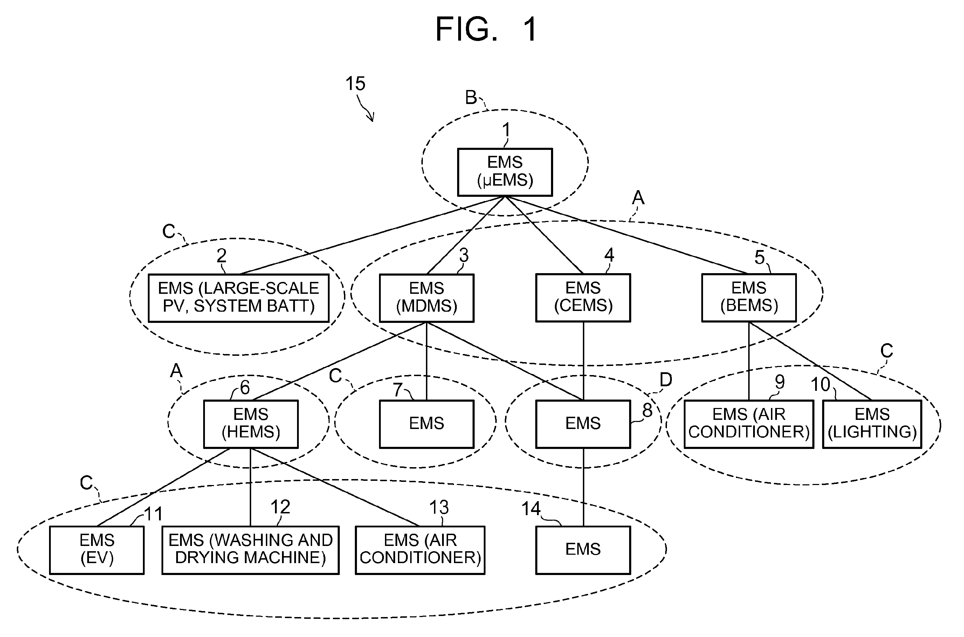

Hereinafter, embodiments will be described referring to the drawings. As illustrated in Fig. 1, an energy supply and demand management system 15 including energy management systems according to first to fifth embodiments includes a plurality of EMSs (Energy Management Systems) 1 to 14 that can be classified, for example, into groups A to D regarding positioning of hierarchical management of power supply and demand.
For example, the energy management system belonging to the group A is an energy management system having, on the system, both of a slave energy management system which is an object to be managed by the energy management system and a host energy management system by which the energy management system is to be managed, and, for example, each of EMSs 3 to 6 corresponds to it. Further, the energy management system belonging to the group B is an energy management system having, on the system, no host energy management system by which the energy management system is to be managed, and an EMS 1 corresponds to it.
Furthermore, the energy management system belonging to the group C is an energy management system having no slave energy management system which is an object to be managed by the energy management system, and, for example, each of EMSs 2, 7, 9 to 14 corresponds to it. Furthermore, the energy management system belonging to the group D is an energy management system having a plurality of host energy management systems by which the energy management system is to be managed, and an EMS 8 corresponds to it.
More specifically, the EMS 1 is configured as a $\mu$EMS (Micro Energy management System) that manages the power supply and demand of the whole energy supply and demand management system 15 in cooperation with an electric power company. The EMS 2 manages power supply and demand about a stationary smart battery in collaboration with, for example, a large-scale PV (Photovoltaic) power generation or an electric power system. The EMS 3 is composed of an MDMS (Meter Data Management System) that collects and analyzes information transmitted from a smart meter monitoring the power generation amount and the power consumption on the customer side and sets the power charge and provides efficient use of energy to the customer.
The EMS 4 is constituted as a CEMS (Community Energy Management System) or the like that manages the power supply amount at power plants including a photovoltaic power plant and a wind power plant and the power demand in an area. The EMS 5 is composed of a BEMS (Building Energy Management System) that manages the power supply and demand for electric power distribution equipment, air-conditioning equipment, lighting facilities, ventilation facilities, OA equipment and so on in a building.

The EMS 6 is constituted as a HEMS (Home Energy Management System) or the like that manages the power supply and demand at home in conjunction with, for example, a HAN (Home Area Network) or the like. Further, for example, the EMSs 9 to 13 are constituted as energy management systems that manage the power supply and demand for an air conditioner and lighting in a building, and an electric vehicle (EV), a washing and drying machine, and an air conditioner at home respectively.

Hereinafter, the configurations of the energy management systems belonging to the above-described groups A to D will be concretely described according to the first to fourth embodiments and the fifth embodiment.

<First Embodiment>

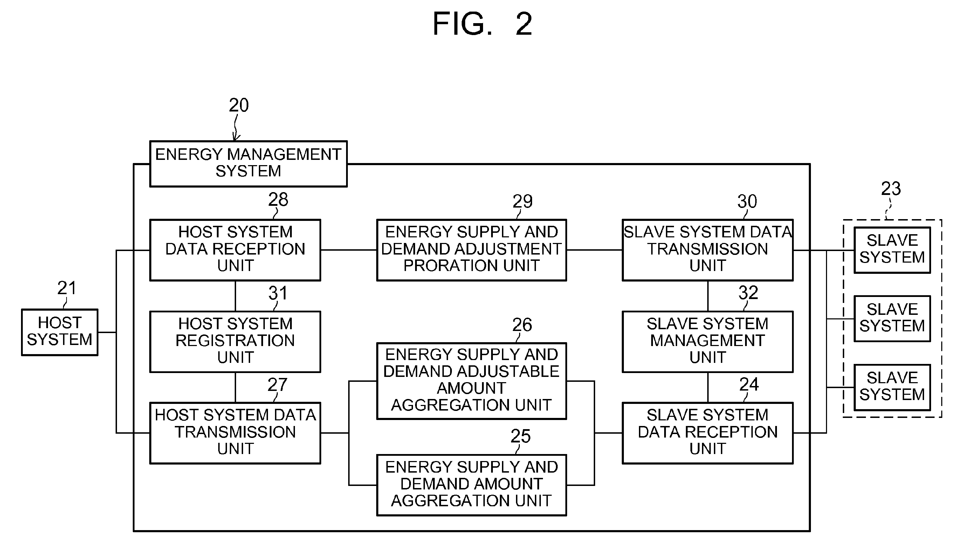

As illustrated in Fig. 1, Fig. 2, an energy management system 20 according to the first embodiment is constituted as, for example, the EMS 3, 5, 6 or the like belonging to the above-described group A. The energy management system 20 is managed about the power supply and demand by a single host system (a host energy management system) 21 as illustrated in Fig. 2. On the other hand, the energy management system 20 has a plurality of slave systems (slave energy management systems) 23 as objects to be managed about the power supply and demand.

Here, the configurations of the host system 21 and the slave system 23 will be described in detail in later-described second embodiment and third embodiment. The energy management system 20 in this embodiment has functions for implementing broadly-divided three kinds of processing, such as cooperation management processing, measurement and monitoring processing, and control processing.

More specifically, the energy management system 20 includes: a host system registration unit 31 and a slave system management unit 32 for implementing the cooperation management processing; a slave system data reception unit 24, an energy supply and demand amount aggregation unit 25, an energy supply and demand adjustable amount aggregation unit 26, and a host system data transmission unit 27 for implementing the measurement and the monitoring processing; and a host system data reception unit 28, an energy supply and demand adjustment amount proration unit 29, and a slave system data transmission unit 30 for implementing the control processing, as illustrated in Fig. 2.

The host system 21 and the slave system 23 are connected to the energy management system 20 via the host system data transmission unit 27, the host system data reception unit 28, the slave system data transmission unit 30, and the slave system data reception unit 24, using network communication employing a short range wireless communication standard such as ZigBee (registered trademark) or a wireless or wired communication line such as LAN, Bluethooth (registered trademark).

As illustrated in Fig. 2, the host system registration unit 31 has a function as a first registration unit and creates registration application data for performing registration request (registration application) to the host system 21 when the energy management system 20 is managed about the power supply and demand by the host system 21. The registration application data is assumed to include at least unique information (for example, preset serial number, IP address, physical address of a communication adapter) for identifying the energy management system 20.

The host system 21 accepts the registration request requested through the registration application data and registers the energy management system 20 as an object to be managed. When the host system registration unit 31 has acquired (received via the host system data reception unit 28) information representing permission of registration (a signal representing acceptance of the registration application) as a response from the host system 21 to the registration request, the host system registration unit 31 registers the host system 21 as a host energy management system by which the energy management system 20 is to be managed (registers the identification information or the like unique to the host system 21). This establishes the cooperation between the host system 21 and the energy management system 20.

Further, when having acquired information representing permission of registration cancel as a response to a registration cancel request requested to the registered host system 21, the host system registration unit 31 excludes the host system 21 from the object by which the energy management system 20 is to be managed. In other words, when having accepted appropriate cancel application data from the energy management system 20, the host system 21 sends registration cancel data permitting registration cancel back to the energy management system 20.

In more detail, the host system registration unit 31 detects whether a trigger of registration cancel has been inputted from the outside. When having detected the input of the trigger of registration cancel, the host system registration unit 31 creates the cancel application data as cancel application processing to the host system 21. The created cancel application data is transmitted to the host system 21 by the host system data transmission unit 27. The aforementioned trigger of registration cancel may be artificially directly inputted via an input interface installed in the host system registration unit 31. Further, the trigger of registration cancel may be indirectly inputted via a communication line from another system different from the energy management system 20.

As illustrated in Fig. 2, the slave system management unit 32 has a function as a second registration unit. When having accepted the registration request from the slave system 23, the slave system management unit 32 registers the slave system 23 as a slave energy management system which is an object to be managed. Concretely, the slave system management unit 32 determines whether the slave system data reception unit 24 has received the registration application data from the slave system 23. The registration application data is assumed to include at least unique information (for example, preset serial number, IP address, physical address of a communication adapter) for identifying the slave system 23 similarly to the case of the registration application data to the host system 21.

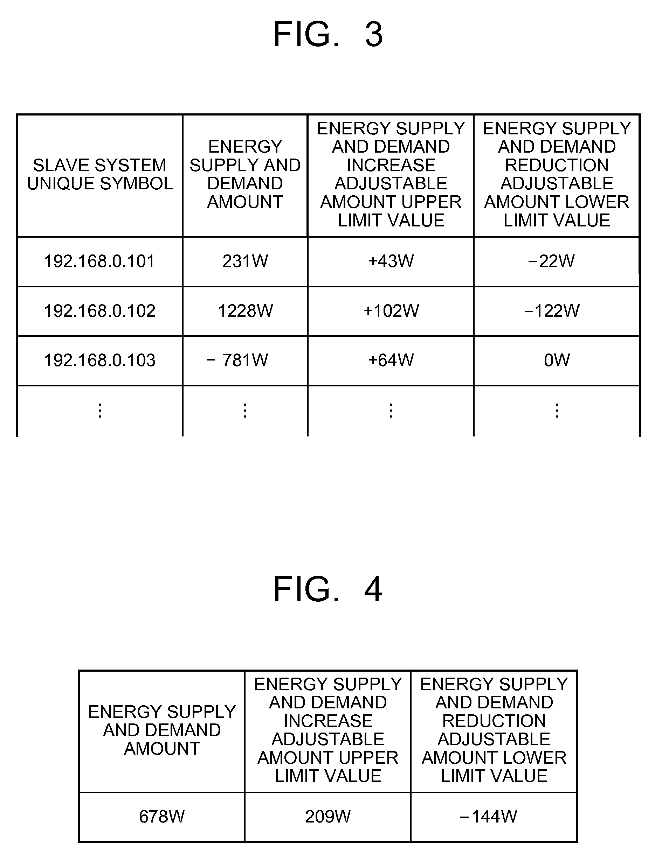

More specifically, when having acquired the registration application data from the slave system 23 via the slave system data reception unit 24, the slave system management unit 32 registers the slave system 23 as a system being an object to be managed about the power supply and demand (registers a later-described slave system unique symbol exemplified in Fig. 3), and causes the slave system data transmission unit 30 to transmit a signal representing the acceptance of the registration application to the slave system 23.

Further, when having accepted the registration cancel request from the registered slave system 23, the slave system management unit 32 excludes the slave system 23 from the object to be managed. Concretely, when the slave system data reception unit 24 has received the cancel application data from the slave system 23, the slave system management unit 32 cancels the registration of the slave system 23 that has been the object to be managed (deletes the slave system unique symbol exemplified in Fig. 3), and causes the slave system data transmission unit 30 to transmit a signal representing the acceptance of the cancel application to the slave system 23.

As illustrated in Fig. 2, the slave system data reception unit 24 has a function as a first reception unit. The slave system data reception unit 24 receives, from each of the plurality of slave systems 23 registered as objects to be managed, an energy supply and demand amount representing current power supply and demand amounts and an energy supply and demand adjustable amount representing an amount adjustable with respect to the current power supply and demand amounts together with the slave system unique symbol allowing the slave system 23 to be identified, as illustrated in Fig. 3. Here, the energy supply and demand amount is a value obtained by adding the power consumption on the customer side (power demand amount on a load side) monitored, for example, by the smart meter or the like and the power supply amount from the power supplier side.

As illustrated in Fig. 3, the energy supply and demand adjustable amount has an energy supply and demand increase adjustable amount upper limit value and an energy supply and demand reduction adjustable amount lower limit value respectively representing an upper limit value and a lower limit value which are adjustable with respect to the current power supply and demand amounts. In more detail, in the case where a power device being an object to be managed about the power supply and demand by the slave system (slave energy management system) 23 is, for example, an air conditioner, the energy supply and demand adjustable amount is calculated by the slave system 23 on the basis of a temperature difference required for changing the current room temperature to a target set temperature, a remaining time from the current time to a time when the set temperature needs to be achieved and so on.

Further, in the case where an object to be managed about the power supply and demand by the slave system (slave energy management system) 23 is, for example, an electric vehicle or the like, the energy supply and demand adjustable amount is calculated by the slave system 23 on the basis of an additional amount of charge required for changing from the current amount of charge to a full charge, a remaining time from the current time to a time when the full charge needs to be achieved and so on.

The energy supply and demand amount aggregation unit 25 and the energy supply and demand adjustable amount aggregation unit 26 are aggregation unit (a first aggregation unit) that aggregate the energy supply and demand amount and the energy supply and demand adjustable amount (the energy supply and demand increase adjustable amount upper limit value and the energy supply and demand reduction adjustable amount lower limit value) for each of the plurality of slave systems 23, which are received by the slave system data reception unit 24, respectively as illustrated in Fig. 4. The host system data transmission unit 27 has a function as a first transmission unit. The host system data transmission unit 27 transmits aggregated results (aggregated values), exemplified in Fig. 4, aggregated by the energy supply and demand amount aggregation unit 25 and the energy supply and demand adjustable amount aggregation unit 26, to the registered host system 21.

As illustrated in Fig. 2, the host system data reception unit 28 has a function as a second reception unit. The host system data reception unit 28 receives an energy supply and demand adjustment amount representing an adjustment amount to adjust power supply and demand from the host system 21. The energy supply and demand adjustment amount is calculated by the host system 21 on the basis of the above aggregated results. As illustrated in Fig. 1, for example, in the case where the energy management system 20 in this embodiment is the EMS 6 and the host system 21 is the EMS 3, the host system 21 has the EMSs 7, 8 as objects to be managed, in addition to the EMS 6.

In other words, the host system 21 secures supply of power of a predetermined value or more to the EMSs 7, 8 side and then calculates the energy supply and demand adjustment amount on the basis of the above aggregated results. The energy supply and demand adjustment amount is for practically adjusting the power supply amount to be managed by the host system 21 side with respect to the energy management system 20 side. The energy supply and demand adjustment amount is calculated as a value made by increasing/decreasing the aggregated value (for example, 678 W) of the energy supply and demand amount (the amount obtained by adding the power demand amount and the power supply amount) exemplified in Fig. 4, within a range of the aggregated value of the energy supply and demand adjustable amount (within a range, for example, of the upper limit + 209 W to the lower limit - 144 W in reference to the aforementioned 678 W).

The energy supply and demand adjustment amount proration unit 29 is a proration unit (a first proration unit) that prorates (distributes) the energy supply and demand adjustment amount received by the host system data reception unit 28 from the host system 21, among the plurality of slave systems 23. A conceivable method for prorating (distributing) the energy supply and demand adjustment amount received from the host system 21 is a method of prorating it in proportion to the energy supply and demand amounts of the individual slave systems 23. Concretely, a proration amount pi to a slave system (23)i can be calculated by the following Mathematical Expression 1 where the energy supply and demand adjustment amount received from the host system 21 is P and the energy supply and demand amount of the slave system i is di.

$$p_i = P \times \frac{d_i}{\sum\limits_i d_i} \qquad \text{Mathematical Expression 1}$$

Further, another conceivable method for prorating the energy supply and demand adjustment amount received from the host system 21 is a method of prorating it in proportion to the energy supply and demand adjustable amounts of the individual slave systems 23. Concretely, the proration amount pi to the slave system (23)i can be calculated by the following Mathematical Expression 2 where the energy supply and demand adjustment amount received from the host system 21 is P, the energy supply and demand increase adjustable amount upper limit value of the slave system i is ui, and the energy supply and demand reduction adjustable amount lower limit value of the slave system i is li.

$$p_i = \begin{cases} P \times \dfrac{u_i}{\sum\limits_i u_i} & \cdots \quad (P \geq 0) \\ P \times \dfrac{l_i}{\sum\limits_i l_i} & \cdots \quad (P < 0) \end{cases} \qquad \text{Mathematical Expression 2}$$

The slave system data transmission unit 30 has a function as a second transmitted (a second transmission unit). The slave system data transmission unit 30 transmits individual power supply and demand adjustment amounts prorated from the energy supply and demand adjustment amount to the plurality of slave systems 23 respectively. Here, in the case where the slave system 23 is the EMS 12 (the bottom energy management system) or the like illustrated in Fig. 1, supply of power to the electric equipment (the washing and drying machine) managed by the EMS 12 is controlled on the basis of the power supply and demand adjustment amount prorated to the EMS 12.

The above-described host system registration unit 31, slave system management unit 32, slave system data reception unit 24, energy supply and demand amount aggregation unit 25, energy supply and demand adjustable amount aggregation unit 26, host system data transmission unit 27, host system data reception unit 28, energy supply and demand adjustment amount proration unit 29, and slave system data transmission unit 30 may be implemented by software by executing an energy management program on a computer or may be individually constituted by hardware.

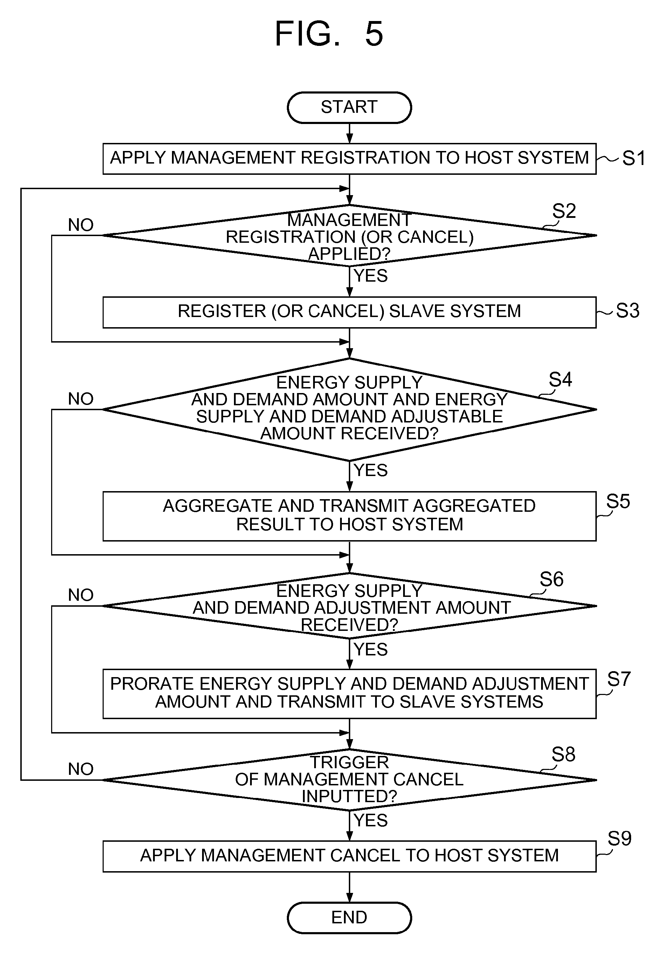

Next, an energy management method executed by the energy management system 20 configured as described above will be explained based on a flowchart illustrated in Fig. 5. First, the registration application data is transmitted from the host system data transmission unit 27 to the host system 21 (S1), and when the host system registration unit 31 has acquired through the host system data reception unit 28 the information representing the acceptance of the registration application as a response to the registration application (registration request) to the host system 21, the host system registration unit 31 registers the host system 21 as the host energy management system by which the energy management system 20 is to be managed. This establishes the cooperation between the host system 21 and the energy management system 20.

Further, the slave system management unit 32 determines the presence or absence of the management registration application (or the cancel application of management registration) from the slave system 23 depending on whether the slave system data reception unit 24 has received the registration application data (or the cancel application data) from the slave system 23 (S2). When having accepted the management registration application (or the cancel application of management registration) from the slave system 23 (YES at S2), the slave system management unit 32 registers the slave system 23 as the object to be managed (or cancels the registration to exclude it from the object to be managed) (S3).

Further, it is determined whether the slave system data reception unit 24 has received the energy supply and demand amount and the energy supply and demand adjustable amount as illustrated in Fig. 3 from the plurality of slave systems 23 registered as the objects to be managed (S4) When the energy supply and demand amount and the energy supply and demand adjustable amount have been received (YES at S4), the energy supply and demand amount aggregation unit 25 and the energy supply and demand adjustable amount aggregation unit 26 aggregate the energy supply and demand amount and the energy supply and demand adjustable amount (the energy supply and demand increase adjustable amount upper limit value and the energy supply and demand reduction adjustable amount lower limit value) for each of the slave systems 23, respectively as illustrated in Fig. 4.

Further, the host system data transmission unit 27 transmits, for example, the aggregated value exemplified in Fig. 4 aggregated by the energy supply and demand amount aggregation unit 25 to the host system 21 (S5). In this manner, the slave system data reception unit 24, the energy supply and demand amount aggregation unit 25, the energy supply and demand adjustable amount aggregation unit 26, and the host system data transmission unit 27 implement the measurement and monitoring processing of reporting the results of the measurement and monitoring relating to the power supply and demand of each of the slave systems 23 to the host system 21.

Then, it is determined whether the host system data reception unit 28 has received the energy supply and demand adjustment amount from the host system 21 (S6). When the host system data reception unit 28 has received the energy supply and demand adjustment amount from the host system 21 (YES at S6), the energy supply and demand adjustment amount proration unit 29 prorates the energy supply and demand adjustment amount received by the host system data reception unit 28 from the host system 21, among the plurality of slave systems 23 being the objects to be managed.

Subsequently, the slave system data transmission unit 30 transmits the individual power supply and demand adjustment amounts prorated from the energy supply and demand adjustment amount, to the slave systems 23 respectively (S7). In this manner, the host system data reception unit 28, the energy supply and demand adjustment amount proration unit 29, and the slave system data transmission unit 30 implement the control processing of prorating the energy supply and demand adjustment amount from the host system 21 and reporting the prorated amounts to the slave systems 23.

Thereafter, the host system registration unit 31 detects whether the trigger of registration cancel has been inputted from the outside (S8). When having detected the input of the trigger of registration cancel (YES at S8), the host system registration unit 31 creates the cancel application data. The cancel application data is transmitted to the host system 21 by the host system data transmission unit 27. Thus, the cancel of management registration is applied to the host system 21 (S9). In this manner, the host system registration unit 31 and the above-described slave system management unit 32 implement the cooperation management processing between the host system 21 and slave system 23, and, the energy management system 20.

As has been described, the energy management system 20 in this embodiment can achieve cooperation with the host system 21 by which the energy management system 20 is to be managed and the plurality of slave systems 23 which are objects to be managed by the energy management system 20 to thereby communicate accurate information relating to the power supply and demand. Accordingly, the energy management system 20 in this embodiment can easily cope with, for example, partial change (addition and deletion of the host or slave energy management system) in the energy supply and demand management system 15 having a hierarchical configuration.

<Second Embodiment>

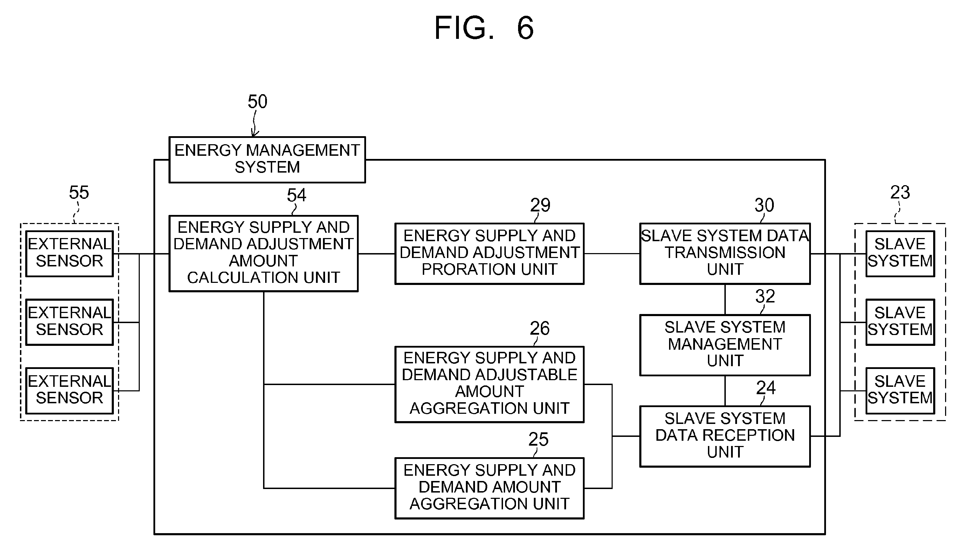

Next, a second embodiment will be described mainly based on Fig. 6. Note that components in Fig. 6 which are the same as those illustrated in the first embodiment illustrated in Fig. 2 are denoted by the same reference numerals, and overlapped description thereof will be omitted.

As illustrated in Fig. 1, Fig. 6, an energy management system 50 according to this embodiment is an energy management system having no host energy management system. The energy management system 50 is configured as, for example, the EMS (µEMS) 1 belonging to the group B illustrated in Fig. 1. More specifically, the energy management system 50 includes, as illustrated in Fig. 6, an energy supply and demand adjustment amount calculation unit 54 in place of the host system data transmission unit 27, the host system data reception unit 28, and the host system registration unit 31 which are included in the energy management system 20 in the first embodiment.

The energy supply and demand adjustment amount calculation unit 54 is a calculation unit (a first calculation unit) that calculates the energy supply and demand adjustment amount on the basis of the aggregated results (the aggregated values of the energy supply and demand amount, the energy supply and demand increase adjustable amount upper limit value, and the energy supply and demand reduction adjustable amount lower limit value for each slave system 23) aggregated by the energy supply and demand amount aggregation unit 25 and the energy supply and demand adjustable amount aggregation unit 26. The energy supply and demand adjustment amount proration unit 29 prorates the energy supply and demand adjustment amount among the individual slave systems 23.

Note that the energy supply and demand adjustment amount calculation unit 54 may acquire measurement data about the power supply and demand of each of the slave systems 23 as necessary, for example, from an external sensor 55 in another system different from the above-described smart sensor and reflect the acquired measurement data in the energy supply and demand adjustment amount to be calculated.

The energy management system 50 in this embodiment configured as described above is located at the top with respect to the other energy management systems and can practically take a role of managing the whole energy supply and demand management system 15.

<Third Embodiment>

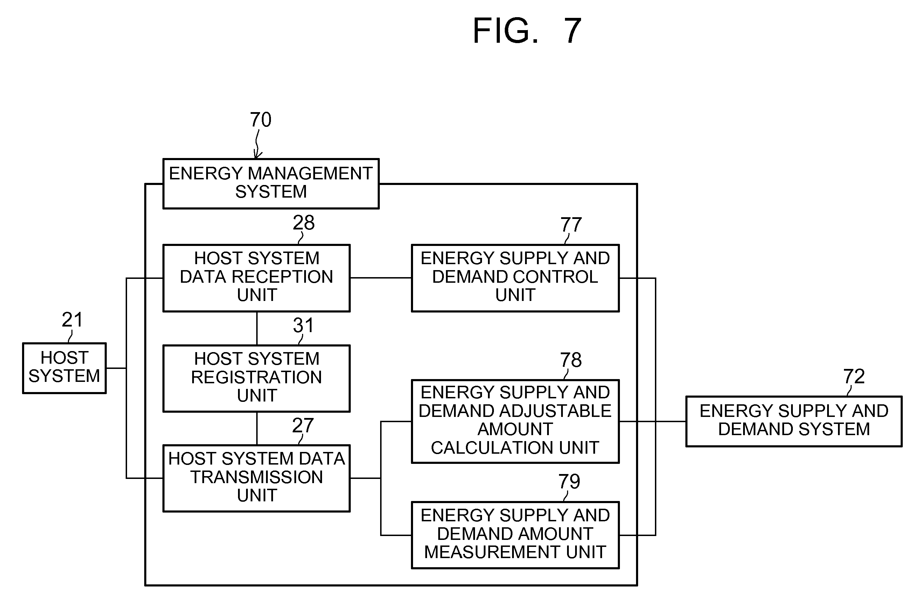

Next, a third embodiment will be described mainly based on Fig. 7. Note that components in Fig. 7 which are the same as those illustrated in the first embodiment illustrated in Fig. 2 are denoted by the same reference numerals, and overlapped description thereof will be omitted.

As illustrated in Fig. 1, Fig. 7, an energy management system 70 according to this embodiment is an energy management system having no slave energy management system. The energy management system 70 is configured as, for example, the EMS 2, 7, 9 to 14 belonging to the group C illustrated in Fig. 1.

More specifically, the energy management system 70 includes, as illustrated in Fig. 7, an energy supply and demand control unit 77, an energy supply and demand adjustable amount calculation unit 78 as a second calculation processor, and an energy supply and demand amount measurement unit 79 in place of the slave system management unit 32, the slave system data reception unit 24, the energy supply and demand amount aggregation unit 25, the energy supply and demand adjustable amount aggregation unit 26, the energy supply and demand adjustment amount proration unit 29, and the slave system data transmission unit 30 which are included in the energy management system 20 in the first embodiment. Further, to the energy management system 70, an energy supply and demand system 72 is connected. The energy supply and demand system 72 is configured, for example, as a dispersed power supply such as a photovoltaic power generator or a power storage device, or a power supply and demand system capable of supplying power to the electric equipment such as an air conditioner, lighting and the like.

The energy supply and demand control unit 77 controls the operation of the energy supply and demand system 72 on the basis of the individual power supply and demand adjustment amount prorated from the energy supply and demand adjustment amount from the host system 21. The energy supply and demand amount measurement unit 79 is a measurement unit (a first measurement unit) such as a smart meter that measures the current power supply and demand amounts by the energy supply and demand system 72 as the above-described energy supply and demand amount. The energy supply and demand adjustable amount calculation unit 78 calculates an amount of the power supply and demand adjustable by the energy supply and demand system 72 as the energy supply and demand adjustable amount (the energy supply and demand increase adjustable amount upper limit value and the energy supply and demand reduction adjustable amount lower limit value).

The energy supply and demand adjustable amount may be calculated based on the ratio between the supply and demand amounts (ratio between the power demand amount and the power supply amount) measured by the energy supply and demand amount measurement unit 79. Further, the energy supply and demand adjustable amount may be calculated as a difference between the energy supply and demand amount and a predetermined threshold value. Furthermore, the energy supply and demand adjustable amount may be calculated based on other algorithm or rules. In more detail, the energy supply and demand control unit 77 controls the power supply and demand by the energy supply and demand system 72 within a range of the energy supply and demand adjustable amount on the basis of the energy supply and demand adjustment amount received by the host system data reception unit 28 from the host system 21.

As has been described, the energy management system 70 in this embodiment is an energy management system located at the bottom in the energy supply and demand management system 15 having a hierarchical configuration. More specifically, the energy management system 70 can manage the power supply and demand for a dispersed power supply or electric equipment such as an air conditioner, lighting, a washing and drying machine or the like. Note that the function of the energy management system 70 and the function of the energy supply and demand system 72 may be installed in the above-described electric equipment itself.

<Fourth Embodiment>

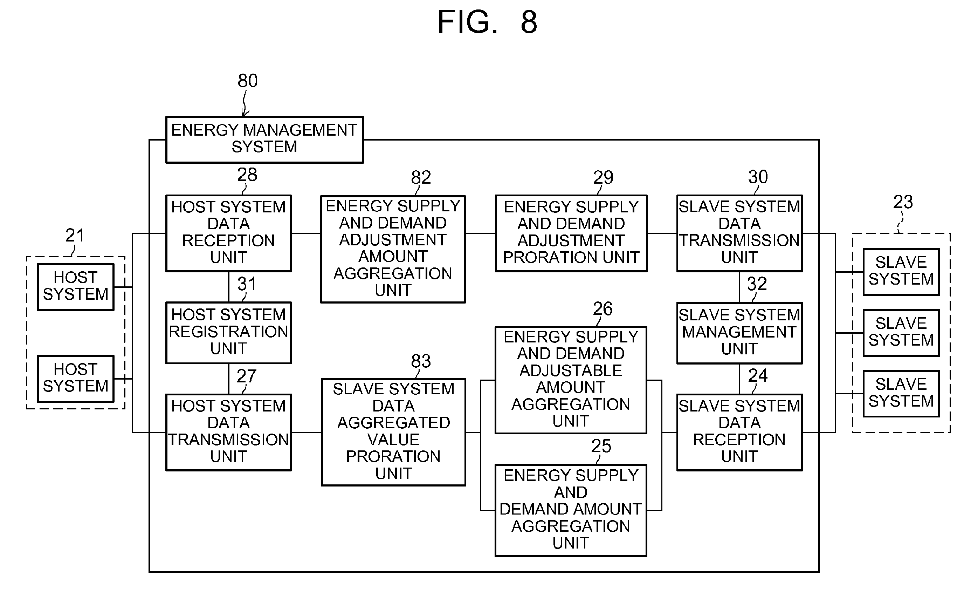

Next, a fourth embodiment will be described mainly based on Fig. 8. Note that components in Fig. 8 which are the same as those illustrated in the first embodiment illustrated in Fig. 2 are denoted by the same reference numerals, and overlapped description thereof will be omitted.

As illustrated in Fig. 1, Fig. 8, an energy management system 80 according to this embodiment is an energy management system having a plurality of host energy management systems by which the energy management system 80 is to be managed. The energy management system 80 is configured as, for example, the EMS 8 belonging to the group D illustrated in Fig. 1. The EMS 8 exemplified in Fig. 1 has a single slave system as an object to be managed, but may have a plurality of slave systems as objects to be managed like the energy management system 80.

Concretely, the energy management system 80 in this embodiment further includes, as illustrated in Fig. 8, an energy supply and demand adjustment amount aggregation unit 82 as a second aggregation processor and a slave system data aggregated value proration unit 83 as a second proration processor, in addition to the configuration of the energy management system 20 in the first embodiment. The slave system data aggregated value proration unit 83 prorates the aggregated results obtained by separately aggregating the energy supply and demand amount and the energy supply and demand adjustable amount for each of the plurality of slave systems 23, among the plurality of registered host systems 21.

The prorating method may beforehand decide a proration rate for the individual host system as a fixed value. Further, the prorating method may be a method of setting a larger proration rate for a system at a higher priority according to a preset priority for each of the host systems. Furthermore, the prorating method may be a method of performing proration on the basis of other algorithm or rules.

The host system data transmission unit 27 transmits the individual aggregated results prorated from the aggregated result by the slave system data aggregated value proration unit 83 to the plurality of host systems 21 respectively. Further, the host system data reception unit 28 receives each energy supply and demand adjustment amount calculated by each of the host systems 21 based on the individual aggregated results, from each of the plurality of host systems 21. The energy supply and demand adjustment amount aggregation unit 82 aggregates the received energy supply and demand adjustment amount for each of the host systems 21. Further, the energy supply and demand adjustment amount proration unit 29 prorates the (aggregated value of) energy supply and demand adjustment amount aggregated by the energy supply and demand adjustment amount aggregation unit 82, among the plurality of slave systems 23.

As described above, even in the case where there are a plurality of host systems 21 by which the energy management system 80 in this embodiment is to be managed, the energy management system 80 accurately reports the current data regarding the power supply and demand acquired from the plurality of slave systems 23, to the plurality of host systems 21. Further, the energy management system 80 aggregates a plurality of energy supply and demand adjustment amounts sent back from the host systems 21 respectively and prorates the aggregated amount. Accordingly, the energy management system 80 can appropriately manage the power supply and demand of each of the slave systems 23.

<Fifth Embodiment>

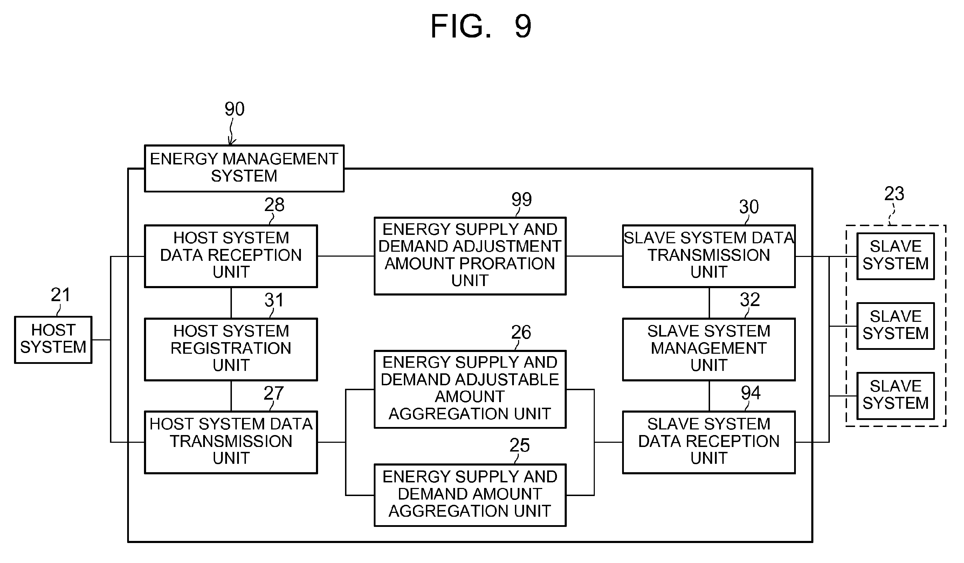

Next, a fifth embodiment will be described based on Fig. 9. Note that components in Fig. 9 which are the same as those illustrated in the first embodiment illustrated in Fig. 2 are denoted by the same reference numerals, and overlapped description thereof will be omitted. As illustrated in Fig, 9, an energy management system 90 according to this embodiment is configured by adding a partial change to the energy management system 20 in the first embodiment illustrated in Fig. 2.

More specifically, the energy management system 90 includes, as illustrated in Fig. 9, a slave system data reception unit 94 and an energy supply and demand adjustment amount proration unit 99 in place of the slave system data reception unit 24 and the energy supply and demand adjustment amount proration unit 29 which are included in the energy management system 20 in the first embodiment. The slave system data reception unit 94 receives the energy supply and demand amount and the energy supply and demand adjustable amount (the energy supply and demand increase adjustable amount upper limit value and the energy supply and demand reduction adjustable amount lower limit value) and, additionally, complementary information relating to conditions under which the above-described energy supply and demand adjustable amount has been calculated, from each of the plurality of slave systems 23. The energy supply and demand adjustment amount proration unit 99 makes correction to the proration of the energy supply and demand adjustment amount on the basis of the received complementary information.

Examples of the aforementioned complementary information include, for example, information on a power cost (electricity rate) made by associating the operational efficiency of electric equipment with the power supply amount, information on uncertainty made by associating the power supply amount with the stability (instability) regarding the operation of the electric equipment, attribute information on the slave system 23 (information representing the installation place of the slave system and the output capacity of the slave system) and so on. Applying, for example, the aforementioned attribute information on the slave system 23 makes it possible to correct the proration of the energy supply and demand adjustment amount in consideration of, for example, the loss, voltage fluctuation, frequency fluctuation during power transmission which are predicted based on the attribute information. In other words, by using the complementary information pieces in combination, the energy supply and demand adjustment amount proration unit 99 can perform proration while optimizing the cost and reflecting the uncertainty or can perform proration only to the slave systems having a specific attribute.

For example, the proration amount pi to the slave system (23)i being an object to be managed is calculated as a proration amount satisfying the conditions of the following Mathematical Expression 3 where the energy supply and demand adjustment amount received from the host system 21 is P, an allowable adjustment error is e, the energy supply and demand amount of the slave system i is di, and the cost per unit amount of the energy supply and demand adjustment amount is ci, thereby enabling adjustment of the energy supply and demand optimizing the cost.

$$\min\left\{\sum_i c_i \cdot p_i\right\} \qquad s.t. \quad P - e \le \sum_i p_i \le P + e \qquad \text{Mathematical Expression 3}$$

As has been described, the energy management system 90 in this embodiment can stabilize the operation in the electric equipment on the load side and optimize the power cost in consideration of the operational efficiency of the electric equipment.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

In more detail, an energy management system including all of the components in the first to fifth embodiments may be configured, or an energy management system made by deleting some components from the energy management system including all of the components may be configured. Further, the components (for example, the energy supply and demand amount aggregation unit 25, the energy supply and demand adjustable amount aggregation unit 26, the energy supply and demand adjustment amount proration unit 29, the host system registration unit 31, and the slave system management unit 32 illustrated in Fig. 2) included in each of the energy management systems according to the first to fifth embodiments can be distributed by being stored, as an energy management program enabling a computer to execute, in a storage medium such as a magnetic disk (a flexible disk, a hard disk or the like), an optical disk (a CD-ROM, a DVD, or the like), a semiconductor memory or the like.

## Claims

1. An energy management system comprising:

   a first registration unit to register a first energy management system as a host system configured to manage the energy management system upon a receipt of information representing permission of registration in reply to a registration request requested to the first energy management system;
   a second registration unit to register a second energy management system as a slave system to be managed by the energy management system upon a receipt of a registration request from the second energy management system;
   a first reception unit to receive an amount of an energy supply and demand and an adjustable amount of an energy supply and demand, the amount of an energy supply and demand representing current power supply and demand amounts, the adjustable amount of an energy supply and demand representing an amount adjustable with respect to the current power supply and demand amounts, from each of a plurality of registered slave energy management systems;
   an aggregation unit to aggregate the received amount of an energy supply and demand and the received adjustable amount of an energy supply and demand for each of the slave systems;
   a first transmission unit to transmit aggregated results obtained by the aggregation unit to the registered host system;
   a second reception unit to receive an adjustment amount of an energy supply and demand representing an adjustment amount to adjust power supply and demand calculated based on the aggregated results, from the host system;
   a proration unit to prorate the received adjustment amount of an energy supply and demand among the plurality of slave systems; and
   a second transmission unit to transmit individual adjustment amounts of a power supply and demand prorated from the adjustment amount of an energy supply and demand, to the plurality of slave systems respectively.

2. The energy management system according to claim 1,

wherein the first registration unit excludes the registered host system as a system configured to manage the energy management system upon a receipt information representing permission of registration cancel as a response to a registration cancel request requested to the registered host energy management system; and

wherein the second registration unit excludes the registered slave system as a system to be managed by the energy management system upon a receipt of a registration cancel request from the registered slave energy management system.

3. The energy management system according to claim 1 or 2, further comprising:

a calculation unit to calculate the adjustment amount of an energy supply and demand on the basis of the aggregated results.

4. The energy management system according to any one of claims 1 to 3, further comprising:

an energy supply and demand control unit to control an operation of an energy supply and demand system capable of supplying power to electric equipment, on the basis of the individual adjustment amount of a power supply and demand prorated from the adjustment amount of an energy supply and demand;

a measurement unit to measure the current power supply and demand amounts by the energy supply and demand system as the amount of an energy supply and demand; and

a second calculation unit to calculate an amount of the power supply and demand adjustable by the energy supply and demand system as the adjustable amount of an energy supply and demand.

5. The energy management system according to any one of claims 1 to 4, further comprising:

a second proration unit to prorate the aggregated results obtained by separately aggregating the amount of an energy supply and demand and the adjustable amount of an energy supply and demand for each of the plurality of slave systems, among a plurality of registered host systems,

wherein the first transmission unit transmits individual aggregated results prorated from the aggregated results by the second proration unit, to the plurality of host systems respectively;

wherein the second reception unit receives each adjustment amount of an energy supply and demand calculated based on the individual aggregated results, from each of the plurality of host systems;

wherein the energy management system further comprises a second aggregation unit to aggregate the received adjustment amount of an energy supply and demand for each of the plurality of host systems; and

wherein the proration unit prorates the adjustment amount of an energy supply and demand aggregated by the second aggregation unit among the plurality of slave systems.

6. The energy management system according to any one of claims 1 to 5,

wherein the first reception unit receives the amount of an energy supply and demand, the adjustable amount of an energy supply and demand, and additionally complementary information relating to conditions used for a calculation of the adjustable amount of an energy supply and demand, from each of the plurality of slave systems; and

wherein the proration unit makes correction to the proration of the adjustment amount of an energy supply and demand on the basis of the received complementary information.

7. An energy management method comprising:

registering a first energy management system as a host system configured to manage the energy management system upon a receipt of information representing permission of registration in reply to a registration request requested to the first energy management system;

registering a second energy management system as a slave system to be managed by the energy management system upon a receipt of a registration request from the second energy management system;

receiving an amount of an energy supply and demand and an adjustable amount of an energy supply and demand, the amount of an energy supply and demand representing current power supply and demand amounts, the adjustable amount of an energy supply and demand representing an amount adjustable with respect to the current power supply and demand amounts, from each of a plurality of registered slave energy management systems;

aggregating the received amount of an energy supply and demand and the received adjustable amount of an energy supply and demand for each of the slave systems;

transmitting aggregated results obtained by the aggregation to the registered host system;

receiving an adjustment amount of an energy supply and demand representing an adjustment amount to adjust power supply and demand calculated based on the aggregated results, from the host system;

prorating the received adjustment amount of an energy supply and demand among the plurality of slave systems; and

transmitting individual adjustment amounts of a power supply and demand prorated from the adjustment amount of an energy supply and demand, to the plurality of slave systems respectively.

8.  An energy management program product for causing a computer to function as:

a first registration unit to register a first energy management system as a host system configured to manage the energy management system upon a receipt of information representing permission of registration in reply to a registration request requested to the first energy management system;

a second registration unit to register a second energy management system as a slave system to be managed by the energy management system upon a receipt of a registration request from the second energy management system;

a first reception unit to receive an amount of an energy supply and demand and an adjustable amount of an energy supply and demand, the amount of an energy supply and demand representing current power supply and demand amounts, the adjustable amount of an energy supply and demand representing an amount adjustable with respect to the current power supply and demand amounts, from each of a plurality of registered slave energy management systems;

an aggregation unit to aggregate the received amount of an energy supply and demand and the received adjustable amount of an energy supply and demand for each of the slave systems;

a first transmission unit to transmit aggregated results obtained by the aggregation unit to the registered host system;

a second reception unit to receive an adjustment amount of an energy supply and demand representing an adjustment amount to adjust power supply and demand calculated based on the aggregated results, from the host system;

a proration unit to prorate the received adjustment amount of an energy supply and demand among the plurality of slave systems; and

a second transmission unit to transmit individual adjustment amounts of a power supply and demand prorated from the adjustment amount of an energy supply and demand, to the plurality of slave systems respectively.

FIG. 1

FIG. 2

# FIG. 3

| SLAVE SYSTEM UNIQUE SYMBOL | ENERGY SUPPLY AND DEMAND AMOUNT | ENERGY SUPPLY AND DEMAND INCREASE ADJUSTABLE AMOUNT UPPER LIMIT VALUE | ENERGY SUPPLY AND DEMAND REDUCTION ADJUSTABLE AMOUNT LOWER LIMIT VALUE |
|---|---|---|---|
| 192.168.0.101 | 231W | +43W | −22W |
| 192.168.0.102 | 1228W | +102W | −122W |
| 192.168.0.103 | − 781W | +64W | 0W |
| ⋮ | ⋮ | ⋮ | ⋮ |

# FIG. 4

| ENERGY SUPPLY AND DEMAND AMOUNT | ENERGY SUPPLY AND DEMAND INCREASE ADJUSTABLE AMOUNT UPPER LIMIT VALUE | ENERGY SUPPLY AND DEMAND REDUCTION ADJUSTABLE AMOUNT LOWER LIMIT VALUE |
|---|---|---|
| 678W | 209W | −144W |

# FIG. 5

START

APPLY MANAGEMENT REGISTRATION TO HOST SYSTEM — S1

MANAGEMENT REGISTRATION (OR CANCEL) APPLIED? — S2

NO

YES

REGISTER (OR CANCEL) SLAVE SYSTEM — S3

ENERGY SUPPLY AND DEMAND AMOUNT AND ENERGY SUPPLY AND DEMAND ADJUSTABLE AMOUNT RECEIVED? — S4

NO

YES

AGGREGATE AND TRANSMIT AGGREGATED RESULT TO HOST SYSTEM — S5

ENERGY SUPPLY AND DEMAND ADJUSTMENT AMOUNT RECEIVED? — S6

NO

YES

PRORATE ENERGY SUPPLY AND DEMAND ADJUSTMENT AMOUNT AND TRANSMIT TO SLAVE SYSTEMS — S7

TRIGGER OF MANAGEMENT CANCEL INPUTTED? — S8

NO

YES

APPLY MANAGEMENT CANCEL TO HOST SYSTEM — S9

END

# FIG. 6

EP 2 876 766 A1

# FIG. 7

EP 2 876 766 A1

EP 2 876 766 A1

# FIG. 8

# FIG. 9

## INTERNATIONAL SEARCH REPORT

International application No.

PCT/JP2013/004327

A. CLASSIFICATION OF SUBJECT MATTER
*H02J3/00*(2006.01)i, *G06Q50/06*(2012.01)i, *H02J13/00*(2006.01)i

According to International Patent Classification (IPC) or to both national classification and IPC

B. FIELDS SEARCHED

Minimum documentation searched (classification system followed by classification symbols)
H02J3/00-3/50, G06Q50/06, H02J13/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2010-279238 A  (The Tokyo Electric Power Co., Inc.),<br>09 December 2010 (09.12.2010),<br>entire text; fig. 1 to 5<br>(Family: none) | 1-8 |
| Y | JP 2009-100550 A  (Meidensha Corp.),<br>07 May 2009 (07.05.2009),<br>paragraphs [0029] to [0034]; fig. 1 to 3<br>(Family: none) | 1-8 |
| P,A | JP 2013-117769 A  (Daikin Industries, Ltd.),<br>13 June 2013 (13.06.2013),<br>paragraphs [0029] to [0051]; fig. 1 to 3<br>& WO 2013/080961 A1 | 1-8 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>10 October, 2013 (10.10.13) | Date of mailing of the international search report<br>22 October, 2013 (22.10.13) |
|---|---|
| Name and mailing address of the ISA/<br>    Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000112515 A
- JP 2000116000 A
- JP 2010166690 A